(19) Europäisches Patentamt
European Patent Office
Office européen des brevets

(11) EP 2 492 633 B1

(12) EUROPEAN PATENT SPECIFICATION

(45) Date of publication and mention of the grant of the patent:
**06.03.2019 Bulletin 2019/10**

(51) Int Cl.:
*G01B 11/06* (2006.01)   *G01B 11/25* (2006.01)
*G01N 21/956* (2006.01)

(21) Application number: **11186829.5**

(22) Date of filing: **27.10.2011**

(54) **Three-dimensional shape measurement apparatus and three-dimensional shape measurement method**

Verfahren und Vorrichtung für dreidimensionale Formvermessung

APPAREIL ET PROCÉDÉ DE MESURE TRIDIMENSIONNELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2011 JP 2011040511**

(43) Date of publication of application:
**29.08.2012 Bulletin 2012/35**

(73) Proprietor: **OMRON Corporation**
**Shiokoji-dori, Shimogyo-Ku**
**Kyoto**
**Kyoto 600-8530 (JP)**

(72) Inventors:
• **Ogino, Hirotaka**
**Kyoto 600-8530 (JP)**

• **Honma, Yuki**
**Kyoto 600-8530 (JP)**
• **Wada, Hirotaka**
**Kyoto 600-8530 (JP)**

(74) Representative: **Horn Kleimann Waitzhofer**
**Patentanwälte PartG mbB**
**Ganghoferstrasse 29a**
**80339 München (DE)**

(56) References cited:
**WO-A1-01/61275      JP-A- 5 296 731**
**JP-A- 2009 260 101   US-A- 5 465 152**
**US-A- 5 995 232**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a three-dimensional shape measurement apparatus and a three-dimensional shape measurement method, and more specifically, to a three-dimensional shape measurement apparatus and a three-dimensional shape measurement method that measure a measurement object, such as solder, that is arranged on a substrate.

RELATED ART

In recent years, three-dimensional shape measurement apparatuses have come to be used in the inspection of the height of solder arranged on substrate. For this inspection, the height of the solder is calculated using a three-dimensional shape measurement apparatus, and if the calculated height satisfies a predetermined condition, the product is judged to be "good". A conventional three-dimensional shape measurement apparatus that is used in such an inspection is disclosed for example in Japanese Patent No. 3868917 (Patent Document 1) and JP 2010-243508A (Patent Document 2).

US 5 465 152 A discloses a method for determining coplanarity with 3-D sensing means of substrates for ball grid array, column grid array, and similar surface mount integrated chips, in which opaque fiducials are provided as index pads.

US 5 995 232 A describes an approach for measuring a quantity of a deposited material on a surface on a substantially flat surface of a circuit board.

JP 5 296 731 A describes a method for providing solder height measurements using a laser beam, wherein the heights of electrodes on a planar board are determined.

JP 2009 260 101 A discloses a method for mounting electronic components using a solder printing apparatus.

WO 01/61275 A1 describes a method and a system for automatically generating reference height data for use in a three-dimensional inspection system.

SUMMARY OF THE INVENTION

PROBLEMS TO BE SOLVED BY THE INVENTION

According to Patent Document 1, a reference area is selected from within a predetermined region on the substrate. Then, a reference height is specified after forming a reference plane from the selected reference area, and the height of the solder is calculated based on this reference height. However, this reference height is based on a plane that is formed from a wiring pattern of the substrate, so that it is difficult to calculate the height of the solder accurately.

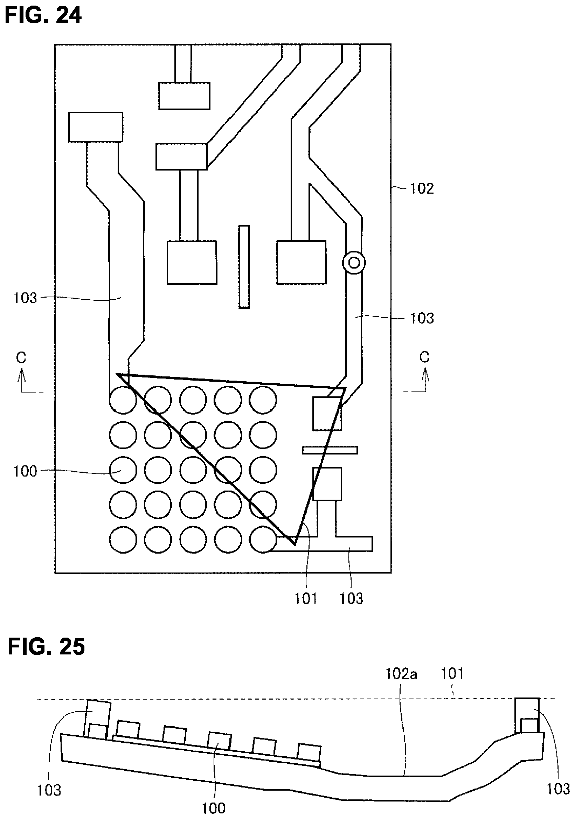

For example, in BGAs (Ball Grid Arrays) of substrates, the wiring is pulled to the inside of the substrate, so that the wiring pattern is positioned away from the lands. Fig. 24 is a plan view showing a substrate 102 including a BGA 100. Fig. 25 is a diagram schematically showing a cross-section taken along the line C-C in the plan view. As shown in Figs. 24 and 25, in this case, when a reference plane 101 is formed from the wiring pattern 103, the reference plane 101 may have a shape that does not extend along the substrate surface 102a or the lands, such as the BGA 100. For example, if the substrate 102 is subject to warping or flexing, it will have such a non-matching shape. As a result, it is difficult to accurately calculate the height of the solder on the lands, such as the BGA 100, from the reference height based on the reference plane 101.

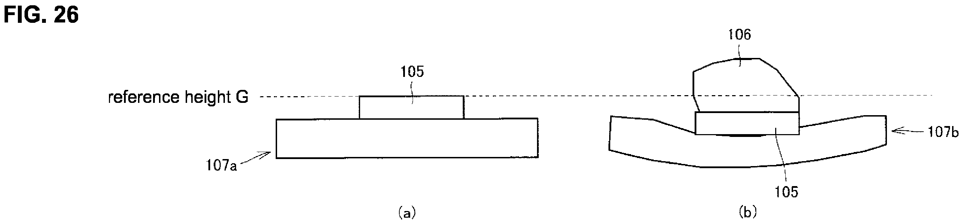

Moreover, according to Patent Document 2, a reference height is set in a substrate in a state prior to the application of solder, and based on the reference height set in this manner, the height of the solder is calculated. However, the state of the substrate prior to the application of solder and the state of the substrate after the application of solder may differ, for example due to warping or flexing or the like. Fig. 26(a) is a diagram showing a substrate prior to the application of solder and Fig. 26(b) is a diagram showing a substrate after the application of solder, schematically showing a cross-section taken along the thickness direction of the substrate. As shown in Fig. 26, the reference height G is the position of a land 105 on the substrate 107a prior to the application of solder, whereas in the substrate 107b after the application of solder, it comes to be positioned at the solder portion 106. In such a case, it is difficult to accurately calculate the height of the solder.

It is an object of the invention to provide a three-dimensional shape measurement apparatus that can accurately calculate the height of solder.

It is another object of the invention to provide a three-dimensional shape measurement method that can accurately calculate the height of solder.

MEANS FOR SOLVING THE PROBLEM

A three-dimensional shape measurement apparatus is provided having the features of claim 1.

Thus, based on the height of the predetermined region, the three-dimensional shape measurement apparatus calculates a height distribution of the substrate at the predetermined region, and calculates the distance between the calculate height distribution of the substrate and the height of the land. In this case, the height distribution of the substrate at the predetermined region reflects changes due to warping or flexing, even when the substrate is subject to warping or flexing, for example. As a result, the calculated distance is calculated while suppressing the influence due to distortions of the substrate. Moreover, to calculate the height of the solder, it is possible to use a distance in which the influence of distortions is suppressed, even if the substrate is subject to such distortions after solder has been applied to the substrate, for example, so that it is possible to accurately calculate the height of the solder.

The height distribution of the substrate calculated by the distribution calculation means is a height from a predetermined reference plane in said predetermined region, said height from the predetermined reference plane being expressed by a curved approximation surface.

The three-dimensional shape measurement apparatus further includes a solder height calculation means for calculating the height of solder applied on the land of the substrate using the distance calculated by the distance calculation means. Thus, the height of the solder can be calculated using a distance that is unaffected by distortions. Consequently, the height of the solder can be calculated more accurately.

The predetermined region is a wiring pattern that is arranged around the land and that includes a conductive line connected to the land. Thus, the distance can be calculated using a wiring pattern that is close to the land, so that the height of the solder can be calculated more accurately.

The solder height calculation means includes a wiring height measurement means for measuring a height of the wiring pattern by obtaining with the image pickup means an image of the wiring pattern of the substrate in a state after the solder has been applied; a curved approximation surface calculation means for calculating a curved approximation surface of the substrate at the wiring pattern, based on the height of the wiring pattern measured with the wiring height measurement means; a solder land height measurement means for measuring a height of the land including the solder by obtaining, with the image pickup means, an image of the solder applied on the land of the substrate, the substrate being in a state after the solder has been applied; wherein the height of the solder is measured using a distance, calculated by the distance calculation means, between a curved approximation surface of the substrate at the wiring pattern calculated by the curved approximation surface calculation means and the height of the land including the solder measured with the solder land height measurement means. Thus, the curved approximation surface is calculated for the wiring pattern in the substrate after the solder application, and the height of the solder is measured. Consequently, even if there is a change between the state of the substrate prior to the solder application and the state of the substrate after the solder application, the height of the solder can be calculated accurately.

Further, a three-dimensional shape measurement method is provided having the features of claims 2.

Thus, a distance between the height of a land and a height distribution of a substrate in a predetermined region, which is based on the height of the predetermined region, is measured and stored. In this case, the height distribution of the substrate at the predetermined region reflects changes due to warping or flexing, even when the substrate is subject to warping or flexing, for example. As a result, the stored distance is stored while suppressing the influence due to distortions of the substrate. Moreover, to calculate the height of the solder, it is possible to use a distance in which the influence of distortions is suppressed, even if the substrate is subject to such distortions after solder has been applied to the substrate, for example, so that it is possible to accurately calculate the height of the solder.

EFFECTS OF THE INVENTION

With the present invention, a three-dimensional shape measurement apparatus calculates a height distribution of a substrate in a predetermined region, which is based on the height of the predetermined region and the distance between this calculated height distribution of the substrate and the height of the lands is calculated. In this case, the height distribution of the substrate at the predetermined region reflects changes due to warping or flexing, even when the substrate is subject to warping or flexing, for example. As a result, the calculated distance is stored while suppressing the influence due to distortions of the substrate. Moreover, to calculate the height of the solder, it is possible to use a distance in which the influence of distortions is suppressed, even if the substrate is subject to such distortions after solder has been applied to the substrate, for example, so that it is possible to accurately calculate the height of the solder.

BRIEF DESCRIPTION OF THE DRAWINGS

Fig. 1      is a schematic diagram showing an example of a three-dimensional shape measurement apparatus according to one embodiment of the present invention.

Fig. 2      is a block diagram of the three-dimensional shape measurement apparatus shown in Fig. 1.

Fig. 3      is a diagram showing the state of a substrate prior to the application of solder.

Fig. 4      is a diagram showing the state of the substrate after the application of solder.

Fig. 5      is a schematic diagram showing the state of the three-dimensional shape measurement apparatus when inspecting the solder application.

Fig. 6      is a flowchart showing the overall procedure when carrying out the inspection.

Fig. 7      is a flowchart showing the processing of a teaching step.

Fig. 8      is a flowchart showing the processing when preparing an approximation surface of the wiring pattern in the substrate prior to the application of solder.

Fig. 9      is a flowchart showing the processing when preparing an approximation surface of the lands in the substrate prior to the application of solder.

Fig. 10     is a flowchart showing the processing when calculating an offset.

Fig. 11     is a flowchart showing the processing in an inspection step.

Fig. 12     is a function block diagram showing the functionality of the CPU when carrying out the inspection.

Fig. 13     is a diagram showing an example of a partitioned inspection block.

Fig. 14     is a diagram schematically showing a cross-section taken in the thickness direction of the substrate, and shows an example of a substrate, for which a surface approximated to a plane is prepared.

Fig. 15     is a diagram schematically showing a cross-section taken in the thickness direction of the substrate, and shows an example of a substrate, for which a surface approximated to a curved surface is prepared.

Fig. 16     is a diagram showing the state in which the region of the wiring pattern has been extracted from the inspection block.

Fig. 17     is a diagram showing the state in which regions for offset calculation have been selected from the extracted region of the wiring pattern shown in Fig. 16.

Fig. 18     is a diagram showing a state in which the land regions have been extracted from the inspection block.

Fig. 19     is a diagram showing the distance, which is the offset, between the approximation surface Sr of the wiring pattern and the approximation surface Sl of the lands.

Fig. 20     is a z-x cross-sectional view through the measurement point P.

Fig. 21     is a z-x cross-sectional view through the measurement point P.

Fig. 22     is a diagram showing a magnification of the portion of the solder and the land in Fig. 21, and is a diagram showing the tangent La and the angle θ.

Fig. 23     is a diagram showing the intersection points M and N.

Fig. 24     is a plan view showing a substrate including a BGA.

Fig. 25     is a diagram schematically showing a cross section along the line C-C in the plan view.

Fig. 26(a)  is a diagram showing a substrate prior to the application of solder and Fig. 26(b) is a diagram showing a substrate after the application of solder, schematically showing a cross-section taken along the thickness direction of the substrate.

## EMBODIMENTS OF THE INVENTION

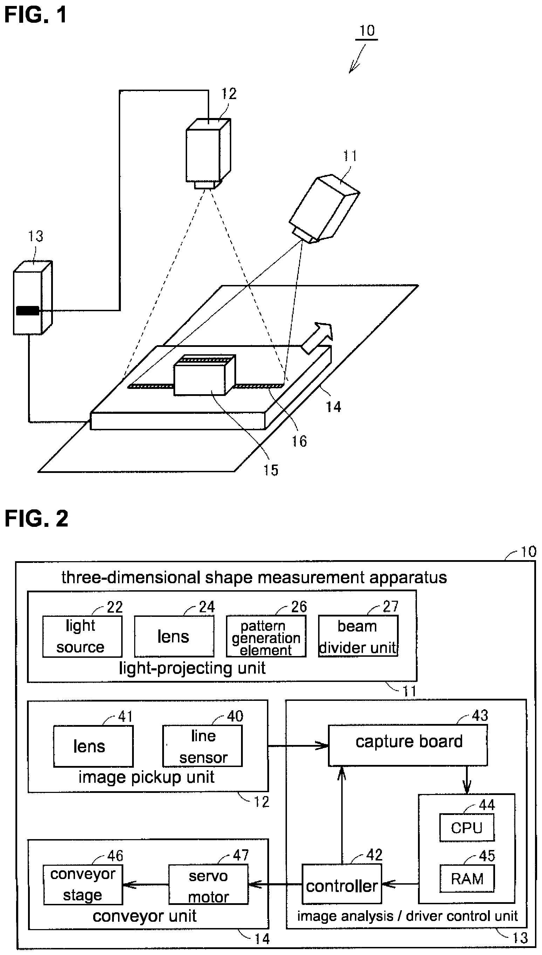

Referring to the drawings, the following is an explanation of a three-dimensional shape measurement apparatus according to an embodiment of the present invention. Fig. 1 is a schematic diagram showing an example of a three-dimensional shape measurement apparatus 10 according to one embodiment of the present invention. Fig. 2 is a block diagram of the three-dimensional shape measurement apparatus 10 shown in Fig. 1. As shown in Figs. 1 and 2, the three-dimensional shape measurement apparatus 10 includes a light-projecting unit 11, an image pickup unit 12, an image analysis / driver control unit 13, and a conveyor unit 14. The light-projecting unit 11 projects a light pattern onto a surface of a measurement object 15 to be measured. The image pickup unit 12 picks up an image of the measurement object 15 on which the light pattern is projected, obtaining an image thereof. The image analysis / driver control unit 13 analyzes the light pattern included in the image that has been picked up by the image pickup unit 12. And the conveyor unit 14 horizontally moves the measurement object 15.

The light-projecting unit 11 projects a light pattern onto the surface of the measurement object 15. The light-projecting unit 11 includes a light source 22 that emits light, a projection lens 24, a pattern generation element 26 for shaping the light emitted from the light source 22 into a pattern, and a beam divider unit 27 for making the border between a region 16 irradiated by the light pattern and region 17 not irradiated by the light pattern clear by letting the light beam pass or blocking it. Note that in this embodiment, the projected light pattern that is used is shaped like a sine wave. Moreover, the light-projecting unit 11 is arranged such that its optical axis defines a predetermined angle with the optical axis of the image pickup unit 12. Thus, the height of the measurement object 15 can be calculated based on shifts in the light pattern that is projected onto the measurement object 15.

The image pickup unit 12 picks up an image of the measurement object 15 on which the light pattern is projected, obtaining an image thereof. The image pickup unit 12 includes a line sensor 40 and an image pickup lens 41.

The image analysis / driver control unit 13 analyzes, by fringe analysis, the light pattern included in the image that has been picked up by the image pickup unit 12, calculates the three-dimensional shape of the measurement object 15, and gives various sorts of instructions with the controller 42. Moreover, the image analysis / driver control unit 13 includes a capture board 43 for reading in the image from the image pickup unit 12 as digital data, a CPU (central processing unit) 44 that performs various kinds of controls, and a RAM (random access memory) 45 storing various kinds of information.

The conveyor unit 14 horizontally conveys the measurement object 15 in a main scanning direction (longitudinal direction) of the line sensor 40, and a direction perpendicular to the main scanning direction (referred to in the following as "secondary scanning direction"). The conveyor unit 14 includes a conveyor stage 46 on which the measurement object 15 can be placed, and a servo motor 47 that drives the conveyor stage 46. The three-dimensional shape measurement apparatus 10 is capable of measuring the three-dimensional shape of the entire measurement object 15 by successively picking up images thereof with the line sensor 40 while moving the measurement object 15 in the secondary scanning direction (the arrow direction in Fig. 1) with the conveyor unit 14.

Here, the main scanning direction axis of the line sensor 40 of the image pickup unit 12 is arranged to be parallel to the measurement surface of the conveyor stage 46 and perpendicular to the conveying direction. Thus, the upper surface of the measurement object 15 can be imaged at a uniform magnification by arranging the optical axis of the line sensor 40 parallel to the measurement surface of the conveyor stage 46. Moreover, since the optical axis of the line sensor 40 is perpendicular to the conveying direction, orthogonal portions are picked up as orthogonal portions in the two-dimensional images made up of a plurality of line images picked up while conveying the measurement object.

The following is an explanation of the operation of the three-dimensional shape measurement apparatus 10. First, by giving a command from the image analysis / driver control unit 13 through the controller 42, the servo motor 47 of the conveyor unit 14 sets the conveyor stage 46 to its initialization position. This initialization position determines the image pickup start position in the secondary scanning direction when the image pickup unit 12 picks up images of the measurement object 15. It is preferable that the image pickup region of the image pickup unit 12 is a position that reaches to the edge in the secondary scanning direction of the measurement object 15 placed on the conveyor stage 46 of the conveyor unit 14.

Then, the light-projecting unit 11 projects the light pattern onto the measurement object 15. The image pickup unit 12 scans the measurement object 15 onto which the light pattern is projected, and obtains images of the measurement object 15. The images obtained with the image pickup unit 12 are sent to the image analysis / driver control unit 13, and converted into digital data by the capture board 43. Then, the CPU 44 analyses the light pattern, calculating height information on the measurement object 15. To analyze the light pattern in the images, it is also possible to use spatial fringe analysis.

It should be noted that a method for calculating the detailed height information of the measurement object 15 is known. For example, the methods described in JP 2009-31105A and JP 2007-114071A can be used.

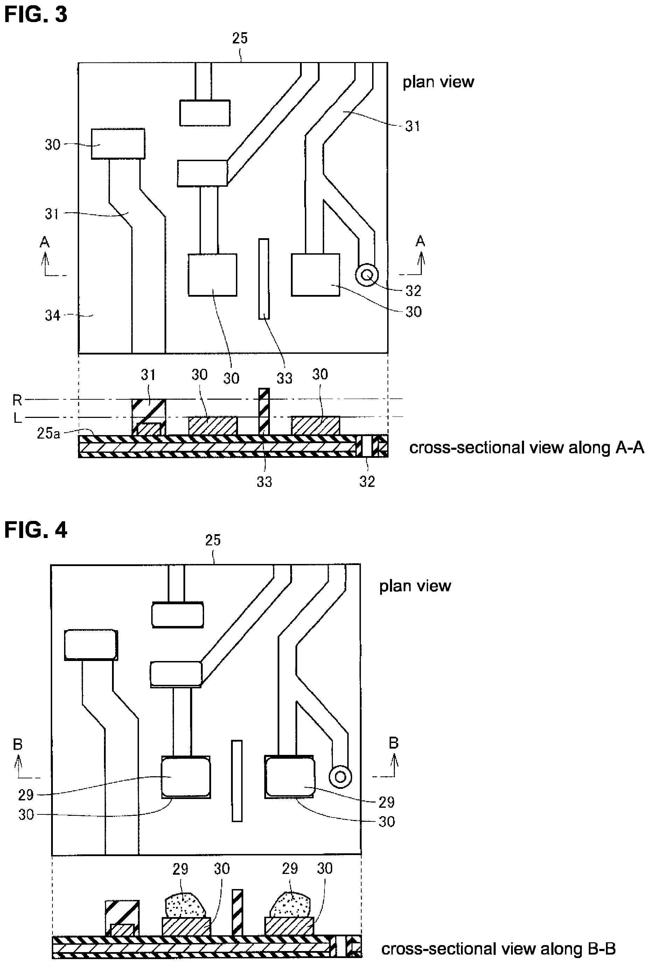

Next, a case is explained, in which an inspection of solder application is carried out by measuring the height of solder applied to a substrate using this three-dimensional shape measurement apparatus 10. First of all, the substrate is explained. Fig. 3 is a diagram showing the state of a substrate 25 prior to the application of solder in a top view and in a cross-sectional view taken along the line A-A in the top view. Fig. 4 is a diagram showing the state of the substrate 25 after the application of solder in a top view and in a cross-sectional view taken along the line B-B in the top view. Note that in Figs. 3 and 4, only a portion of the substrate 25 is shown. As shown in Figs. 3 and 4, lands 30, a wiring pattern 31, a through-hole 32, a serial number 33, and a resist 34 are provided on the substrate 25. The lands 30 are made of a conductive material, such as copper foil or gold, and are the locations to which solder is applied. The wiring pattern 31 includes a conductive line inside. The through hole 32 penetrates the substrate 25 in its thickness direction. The serial number 33 is text indicating a product number of the substrate 25 or the like. The resist 34, which is made of an insulating material, is the portion other than the lands 30 and the wiring pattern 31 of the substrate 25.

The lands 30 and the wiring pattern 31 are connected by a conductive line or the like inside the substrate 25, and their respective heights (indicated by the lines L and R in Fig. 3) from the upper surface 25a of the substrate 25 can be regarded as parallel. And as shown in Fig. 4, solder 29 is applied to the lands 30.

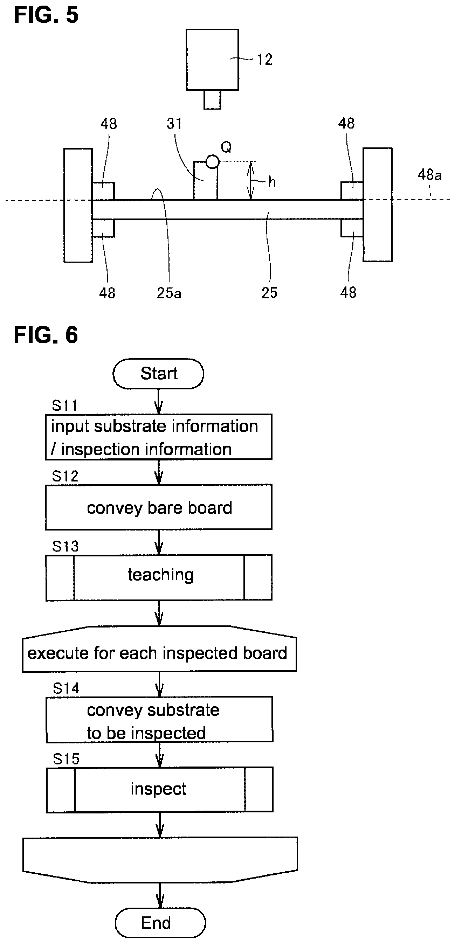

Next, the state of the three-dimensional shape measurement apparatus 10 when inspecting the solder application is explained. Fig. 5 is a schematic diagram showing the state of the three-dimensional shape measurement apparatus 10 when inspecting the solder application. As shown in Fig. 5, the substrate 25 is fixed by clamping both of its sides with a substrate clamper 48 and is placed as the measurement object 15 on the measurement surface of the conveyor stage 46 (not shown in Fig. 5). The height of both sides of this substrate clamper 48 is level. In this situation, a predetermined reference plane that serves as a reference when measuring the height is the plane 48a of the substrate clamper 48 contacting the upper surface 25a of the substrate 25 on the side of the image pickup unit 12. This reference plane 48a is indicated by the dotted line in Fig. 5. As for the measured height, the direction from the reference plane 48a towards the image pickup unit 12 is taken as a positive value. That is to say, the reference plane 48a has a height of zero. For example, the height up to the point Q of the member 31 on the substrate 25 is indicated as "h" in Fig. 5.

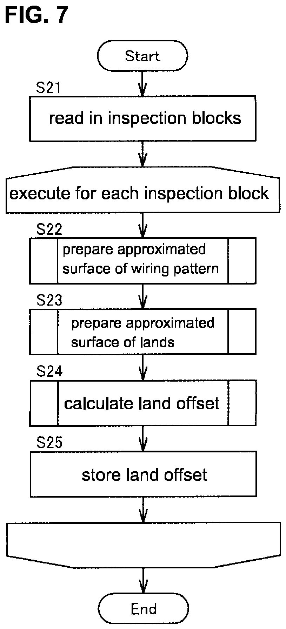

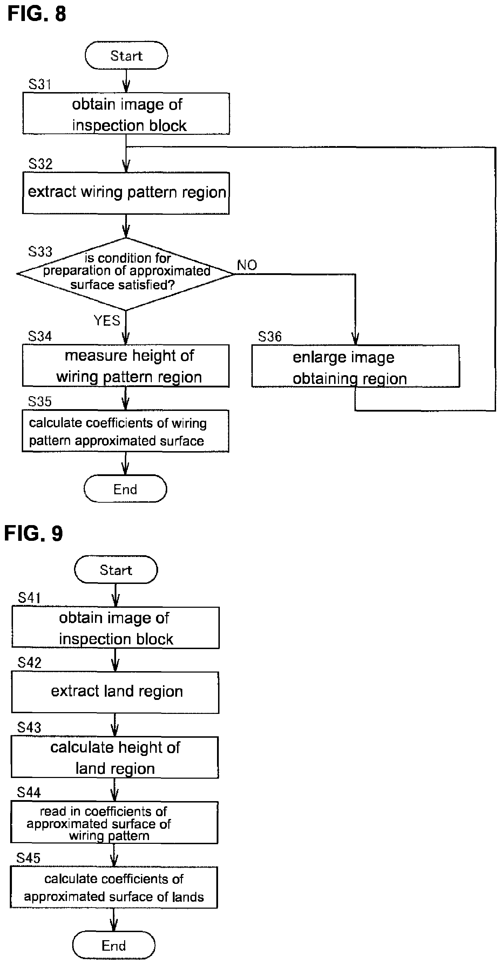

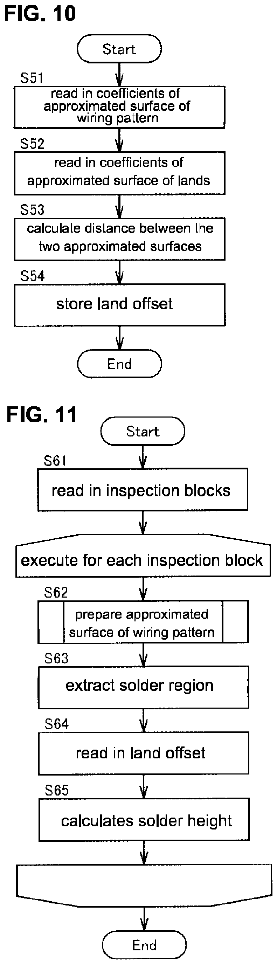

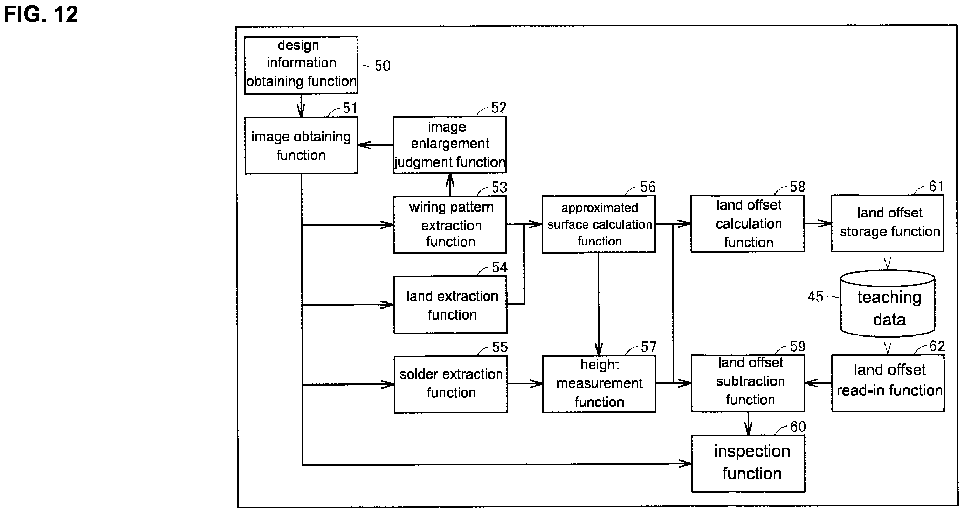

Here, a case is explained, in which the height of the solder 29 applied to the substrate 25 is measured to inspect the height of the solder 29. Fig. 6 is a flowchart showing the overall procedure when carrying out the inspection. Fig. 7 is a flowchart showing the processing of a teaching step. Fig. 8 is a flowchart showing the processing when preparing an approximation surface of the wiring pattern on the substrate 25 prior to the application of solder. Fig. 9 is a flowchart showing the processing when preparing an approximation surface of the lands on the substrate 25 prior to the application of solder. Fig. 10 is a flowchart showing the processing when calculating an offset. Fig. 11 is a flowchart showing the processing in an inspection step. Fig. 12 is a function block diagram showing the functionality of the CPU 44 when carrying out the inspection. The following explanations make reference to Figs. 6 to 12.

First, as shown in Fig. 6, to inspect the height of the solder 29, the three-dimensional shape measurement apparatus 10 receives an input of substrate information, such as the name of the substrate 25 or the size of the substrate 25, from the RAM 45. Moreover, it receives an input of information on an inspection block, which is the region on the substrate 25 in which an inspection is to be carried out (Step S11 in Fig. 6; in the following "Step" may be omitted). Here, the CPU 44 serves as a design information obtaining function 50. Moreover, a substrate 25 to which solder has not yet been applied, that is, the bare board (raw substrate) as shown in Fig. 3 is conveyed by the conveyor unit 14 to a predetermined position (S12), and a teaching step is carried out (S13). In the teaching step, a reference for measuring the height of the solder 29 is set. The specifics of this teaching step are explained later.

Then, after the teaching step has been finished, solder 29 is applied. After this, a substrate 25 to which solder has been applied, as shown in Fig. 4, is conveyed by the conveyor unit 14 to a predetermined position (S14), and the height of the solder 29 is inspected (S15). The specifics of this inspection are explained later. The processing of these Steps S14 to S15 is repeated for each substrate.

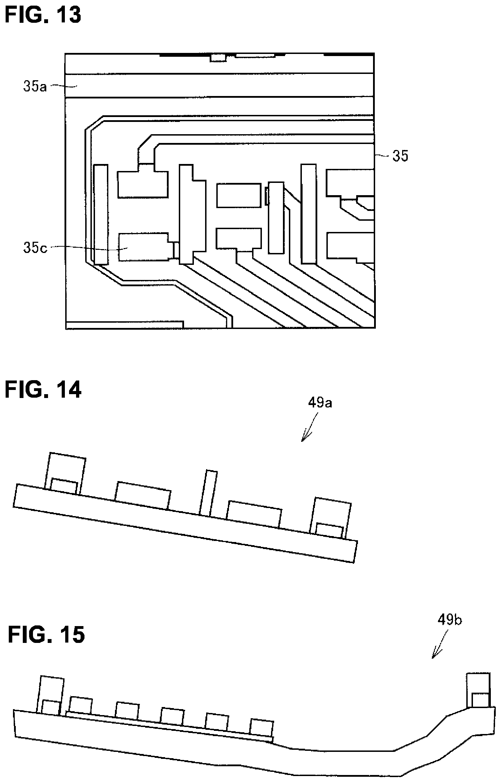

Next, the teaching step in S13 is explained with reference to Fig. 7. First of all, an image of the conveyed bare board is taken with the image pickup unit 12. Here, the image pickup unit 12 serves as an image obtaining function 51, that is to say, as an image pickup means. Then, the picked up image is partitioned into a plurality of blocks of predetermined size, with one block serving as an inspection block subjected to inspection (S21). Note that for the number of partitions of the image, preset data may be used for example, but it is also possible that the user makes these settings manually, or to make the settings by any other method. Fig. 13 is a diagram showing an example of a partitioned inspection block 35. As shown in Fig. 13, the inspection block 35 includes a wiring pattern 35a and lands 35c.

Then, an approximation surface of the wiring pattern is prepared for the inspection block 35 (S22). This approximation surface is a plane or a second order surface (referred to as "curved surface" below). Fig. 14 is a diagram schematically showing a cross-section taken in the thickness direction of the substrate, and shows an example of a substrate 49a, for which a surface approximated to a plane is prepared. Fig. 15 is a diagram schematically showing a cross-section taken in the thickness direction of the substrate, and shows an example of a substrate 49b, for which a surface approximated to a curved surface is prepared. As shown in Fig. 15, in the case of a curved surface, some minor bending and flexing or the like occurs in the substrate 49b. This minor bending and flexing occurs if the range of the image of the substrate covered by the one inspection block 35 is broad. In this embodiment, a curved surface is employed, and a curved approximation surface is prepared as the approximation surface.

Here, the approximation surface Sr of the wiring pattern is expressed by the following equation. Note that "a" to "f" are coefficients.

$$z = ax^2 + by^2 + cxy + dx + ey + f \qquad \cdots (1)$$

The specifics of the process of preparing the approximation surface Sr of the wiring pattern are explained further below.

Also an approximation surface of the lands is prepared (S23) for the inspection block 35. Here, the approximation surface Sl of the lands is expressed by the following equation. Note that "a" to "e" and "g" are coefficients, and "a" to "e" are the same coefficients as for the approximation surface Sr of the wiring pattern.

$$z = ax^2 + by^2 + cxy + dx + ey + g \qquad \cdots (2)$$

The approximation surface Sr of the wiring pattern and the approximation surface Sl of the lands are regarded as parallel. The specifics of the process of preparing the approximation surface of the lands are explained further below.

Then, based on the approximation surface Sr of the wiring pattern and the approximation surface SI of the lands that have been prepared, the offset is calculated (S24). This offset is a value that is used when measuring the height of the solder 29. Then, the calculated offset is stored in the RAM 45 (S25). The specifics of the process of calculating the offset are explained further below. The processing of these Steps S22 to S25 is repeated for each of the plurality of inspection blocks.

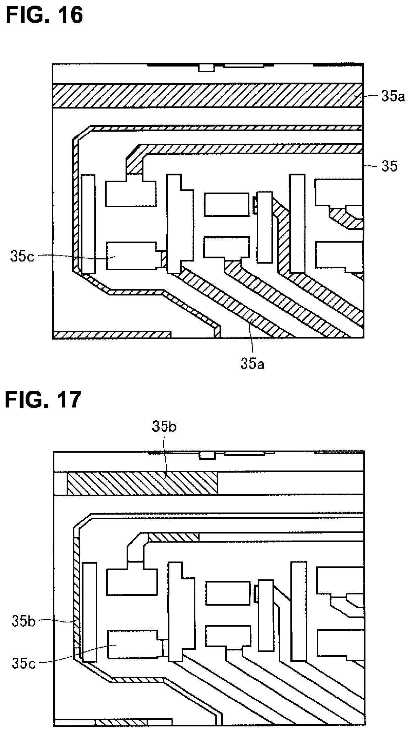

Next, referring to Fig. 8, the process of preparing the approximation surface of the wiring pattern in S22 is explained. First, as shown in S21 and Fig. 13, an image of an inspection block 35 is obtained (S31), and a region of a wiring pattern is extracted (S32). Here, the CPU 44 serves as a wiring pattern extraction function 53. Fig. 16 is a diagram showing the state in which the region 35a of the wiring pattern has been extracted from the inspection block 35. As shown in Fig. 16, the region 35a of the wiring pattern is hatched. Then, regions for offset calculation are selected from the extracted region 35a of the wiring pattern. Fig. 17 is a diagram showing the state in which regions 35b for offset calculation have been selected from the extracted region 35a of the wiring pattern in Fig. 16. These regions 35b for offset calculation are hatched in Fig. 17. Here, regions are selected that are arranged around the lands 35c. Moreover, not only regions that are close to the lands 35c in the inspection block 35 but also regions that are further away from the lands 35c are selected. Moreover, they are selected such that six loci are included. That is to say, they are selected such that the conditions for preparing an approximation surface are satisfied. Then, if it is judged that the conditions are satisfied (YES in S33), the heights of the selected regions 35b for offset calculation are measured (S34). Here, the CPU 44 serves as a region height measurement means, and the regions 35b for the offset calculation serve as predetermined regions.

Then, using the positions of the selected regions 35b for offset calculation, that is, the coordinates (x, y, z) indicating the x-position, the y-position and the z-position, the coefficients (a to f) of the approximation surface Sr of the wiring pattern are calculated (S35). Here, the coordinates (x, y) are the values on the image when picked up with the image pickup unit 12, and the coordinate (z) is the value measured in S34. Thus, the approximation surface Sr of the wiring pattern is prepared. That is to say, the approximation surface Sr of the wiring pattern expresses a height distribution of the wiring pattern. Here, the CPU 44 serves as an approximation surface calculation function 56, that is, as a distribution calculation means.

If the condition is not satisfied in S33 (NO in S33), then the region of the image obtained in S31 is enlarged, and the processing from S32 on is carried out again (S36). Here, the CPU 44 serves as an image enlargement judgment function 52.

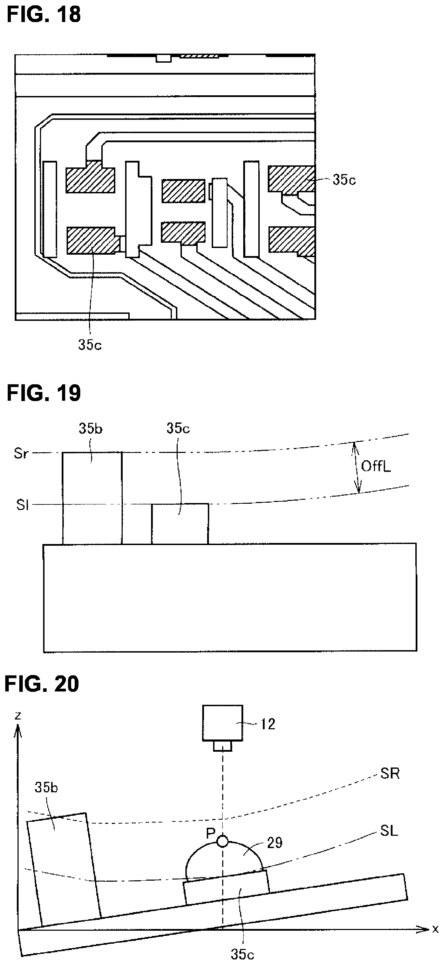

Next, the processing for preparing the approximation surface of the lands in S23 is explained with reference to Fig. 9. First, as in the above-described process S31 of preparing an approximation surface of the wiring pattern, an image of an inspection block 35 is obtained (S41), and land regions are extracted (S42). Here, the CPU 44 serves as a land extraction function 54. Note that if the region of the image has been enlarged in S36, then also here, the land regions are extracted in a state in which the image region is enlarged. Fig. 18 is a diagram showing a state in which the land regions 35c have been extracted from the inspection block 35. The land regions 35c are shown hatched in Fig. 18. Moreover, the heights of the extracted land regions 35c are measured (S43). Here, the CPU 44 serves as a land height measurement means.

Then, the coefficients (a to e), which are the same as the coefficients (a to f) of the approximation surface Sr of the wiring pattern, are read out (S44), and using the position of the extracted land regions 35c, that is, the coordinates (x, y, z) indicating the x-position, the y-position and the z-position, the coefficient (g) of the approximation surface SI of the lands is calculated (S45). The coordinates (x, y) are the values on the image when picked up with the image pickup unit 12, and the coordinate (z) is the value measured in S43. Thus, the approximation surface SI of the lands is prepared. Here, the coefficients other than the coefficient (f) indicating the height direction of the approximation surface Sr of the wiring pattern are the same for the approximation surface SI of the lands, and the approximation surface Sr of the wiring pattern is parallel to the approximation surface SI of the lands.

Referring to Fig. 10, the following is an explanation of the processing for calculating the offset in S24. First of all, the coefficients (a to f) of the approximation surface Sr of the wiring pattern calculated in S35 are read in (S51). Moreover, the coefficients (a to e, g) of the approximation surface SI of the lands calculated in S44 and S45 are read in (S52). Then, the distance (difference) between the approximation surface Sr of the wiring pattern and the approximation surface SI of the lands is calculated (S53). This distance is taken as the offset (OffL), and the offset is stored in the RAM 45 (S54). Here, the CPU 44 serves as a land offset calculation function 58, that is, as a distance calculation means. Moreover, the RAM 45 serves as a land offset storage function 61. Fig. 19 is a diagram schematically showing a cross-section taken along the thickness direction of the substrate 25, where the approximation surface Sr of the wiring pattern is indicated as a double-dot-dashed line, the approximation surface SI of the lands is indicated as triple-dot-dashed line, and the distance OffL indicates the offset. As shown in Fig. 19, the approximation surface Sr of the wiring pattern (distribution of heights of the wiring pattern) is calculated for the regions 35b for offset calculation of the wiring pattern, and the approximation surface SI of the lands (distribution of heights of the lands) is calculated for the regions 35c of the lands.

Referring to Fig. 11, the following is an explanation of the inspection of the height of the solder 29. First of all, solder 29 is applied to the substrate 25. There are cases in which the substrate 25 is warped and tilted differently than prior to the application of solder. The substrate 25 to which the solder has been applied is conveyed in S14, and the inspection blocks are obtained at the same positions as in S12 of Fig. 12 (S61). At this time, the inspection blocks include a measurement point P on the applied solder 29, for example. Fig. 20 is a diagram that schematically shows a cross section of an inspection block of the substrate 25, taken along the thickness direction, and is a z-x cross-sectional view through the measurement point P on the solder 29. The x-axis denotes the horizontal direction in the paper plane (main scanning direction), the z-axis denotes the height direction, and the y-axis denotes the direction out of the paper plane (secondary scanning direction). In the obtained inspection block, the approximation surface SR of the wiring pattern is prepared by measuring the height of the wiring pattern (S62). The specifics of the method for preparing the approximation surface SR of the wiring pattern are the same as in Fig. 8 described above, so that further explanations are omitted. Here, the CPU 44 serves as a wiring height measurement means and a curved approximation surface calculation means. In Fig. 20, the approximation surface SR of the wiring pattern is indicated by a dotted line. The approximation surface SL of the lands is parallel to the approximation surface SR of the wiring pattern, and is indicated by a dot-dashed line.

Moreover, a solder region is extracted from the inspection block (S63), and the offset (OffL) that was stored in the RAM 45 in S54 is read out (S64). Here, the CPU 44 serves as a solder extraction function 55 and as a land offset read-in function 62. Moreover, the height of the solder 29 in the extracted solder region is calculated (S65). Here, the CPU 44 serves as a height measurement function 57 and a land offset subtracting function 59, that is, as a solder height calculation means. Based on the calculated result, it is inspected whether the solder quality is good or poor. Here, the CPU 44 serves as an inspection function 60.

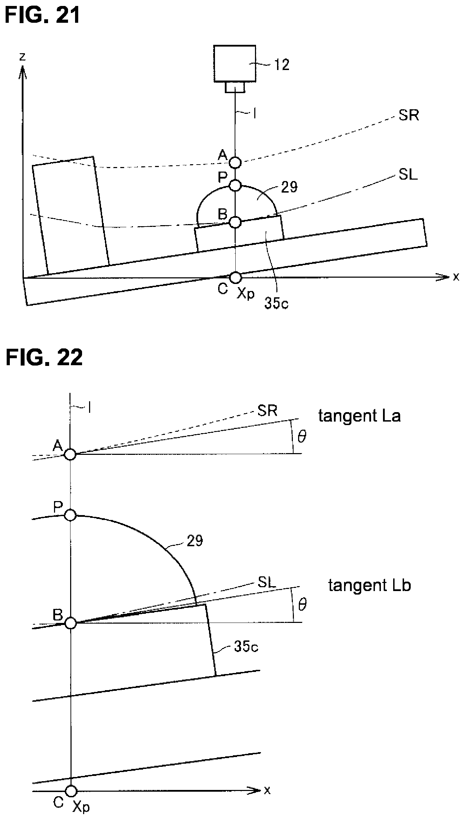

The following is a detailed explanation of a method for calculating the height of the solder 29 in S65. Here, the method for calculating the height of the solder 29 at the measurement point P is explained, under the premise that the measurement point P is included in the extracted solder region in S63. Fig. 21 is a z-x cross-sectional view at the measurement point P, similar to Fig. 20. As in Fig. 20, the x-axis indicates the horizontal direction in the paper plane (main scanning direction), the z-axis denotes the height direction, and the y-axis denotes the direction out of the paper plane (secondary scanning direction). Moreover, "A" denotes the point of intersection between the approximation surface SR of the wiring pattern and the line I through the measurement point P and the image pickup unit 12, "B" denotes the point of intersection between the approximation surface SL of the lands and the line I, and "C" denotes the point of intersection between a height of zero, that is, between the x-axis and the line I. The x-position and the y-position of the points A, P, B and C are taken as the coordinates (Xp, Yp).

First, the length of AC is calculated. Here, the point A is a point on the approximation surface SR of the wiring pattern, so that (Xp, Yp) is inserted into (x, y), and the length of AC is calculated by the following equation.

$$Za = aXp^2 + bYp^2 + cXpYp + dXp + eYp + f \qquad \cdots(3)$$

Here, Za is the length of AC.

Then, the length of PC is calculated. That is to say, the height of the measurement point P is measured. The measurement point P is a point on the solder 29, and this solder 29 is applied on the land 35c. Consequently, the height of the measurement point P is the height of the land 35c, which includes the solder 29. Here, the CPU 44 serves as a solder land height measurement means.

Then, the angle θ defined by the x-axis and the tangent La at the point A on the approximation surface SR of the wiring pattern is calculated. Fig. 22 is a diagram showing a magnification of the portion of the solder 29 and the land 35c in Fig. 21, and is a diagram showing the tangent La and the angle θ. Here, the tangent La is the tangent at the coordinate (Xp, Yp), so that the inclination of the tangent La (tanθ) can be obtained by partially differentiating the equation of the approximation surface SR of the wiring pattern, and inserting (Xp, Yp) for (x, y). It should be noted that also the angle defined by the x-axis and the tangent Lb at the point B on the approximation surface SL of the lands is the same angle θ, and the same result can also be obtained by partially differentiating the equation of the approximation surface SL of the lands. The result of the partial differentiation is given below.

$$\frac{\partial z}{\partial x} = 2ax + cy + d \qquad \cdots(4)$$

When (Xp, Yp) is inserted into (x, y) in this equation, then the following equation is obtained and the angle θ

can be calculated.

$$\tan\theta = 2aXp + cYp + d \qquad \cdots (5)$$

$$\therefore \quad \theta = \arctan(2aXp + cYp + d) \qquad \cdots (6)$$

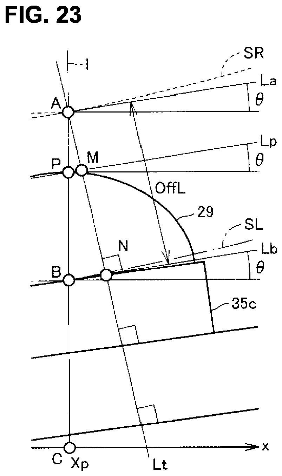

Moreover, Lp is the line through the measurement point P and parallel to the tangents La and Lb, and Lt is the line through the point A and perpendicular to La, Lb and Lp. M is the point of intersection between Lp and Lt, and N is the point of intersection between Lb and Lt. Fig. 23 is a diagram showing the intersection points M and N.
Moreover, when D is the height of the solder 29, then D can be calculated as D = AN - AM. That is to say, in this case, the reference for measuring the height D of the solder 29 is the height of the land calculated from the offset. Here, the length of AN is the value of OffL that has been read out in S64, the length of AM is AP cosθ, and the length of AP can be calculated as AC - PC. As a result, D can be calculated with the following equation.

$$D = OffL - (AC-PC)\cos\theta \qquad \cdots (7)$$

The processing of these Steps S62 to S65 is repeated for each of the plurality of inspection blocks.
Thus, the three-dimensional shape measurement apparatus 10 according to this invention calculates the height distribution in a predetermined region based on the height of a predetermined region, here, the height of the wiring pattern, and calculates the distance (offset) between this calculated height distribution and the height of the lands. In this case, even when the substrate 25 is subject to warping or flexing, the height distribution in the predetermined region reflects the change due to this warping or flexing. As a result, the influence of distortions of the substrate 25 on the calculated distance is suppressed. Moreover, even when the substrate 25 is subject to distortions, for example after applying the solder 29 to the substrate 25, to calculate the height of the solder 29, a distance is used in which the influence of such distortions is suppressed, so that the height of the solder 29 can be calculated accurately.
Moreover, in this case, the offset is a value that is calculated in consideration of both the wiring pattern and the lands, so that it is not calculated only from the wiring pattern, as conventionally, and the height of the solder 29 can be calculated more accurately.
Also, in this case, the offset is calculated for the substrate 25 prior to the application of solder, and the approximation surface of the substrate 25 is calculated again for the wiring pattern with the substrate 25 after the application of solder, and then the height of the solder 29 is measured. Consequently, even when there is a change between the state of the substrate 25 prior to the application of solder and the state of the substrate 25 after the application of solder, the height of the solder 29 can be calculated accurately.
Moreover, in this case, it is possible to calculate the height of only the solder 29, the quantitative solder amount determined in accordance with an industrial standard or the like can be employed for an inspection, and the inspection can be carried out properly.
Moreover, ordinarily the warping or flexing of the substrate 25 differs among different substrates 25. However, in this case, it is possible to calculate the height of the solder 29 by calculating the offset for each substrate 25 individually, so that the height of the solder 29 can be calculated accurately for each substrate 25 individually.
It should be noted that the above-described embodiment was explained for an example with a second-order surface, but there is no limitation to this, and it is also possible to employ a plane or a surface of another shape. In this case, the approximation surface Sr of the wiring pattern in S22 given by Equation (1) and the approximation surface Sl of the lands in S23 given by Equation (2) can be given by the following equations:

$$z = f(x, y, OffL) \qquad \cdots (8)$$

Moreover, when (Xp, Yp) is inserted into (x, y) when calculating the length of AC, it can be given by the following equation.

$$Za = f(Xp, Yp, OffL) \qquad \cdots (9)$$

Moreover, the equation for calculating the angle θ defined by the x-axis and the tangent La at the point A on the approximation surface SR of the wiring pattern as shown in Equations (5) and (6) can be given by the following equation:

$$\tan\theta = \frac{\partial f(x,y,OffL)}{\partial x} \qquad \text{(where } x = Xp, y = Yp) \qquad \cdots (10)$$

$$\therefore \theta = \arctan\theta \qquad \cdots (11)$$

In the above-described embodiment, an example has been described, in which the wiring pattern is employed as a predetermined region, however there is no limitation to this, and it is also possible to use a region of resist near a land, or any other region.

Furthermore, in the above-described embodiment, an example was explained in which an offset was calculated by picking up an image with the image pickup unit 12 to measure the height of the wiring pattern and the height of the lands, and this calculated offset was used to calculate the height of the solder, but there is no limitation to this, and it is also possible to calculate the height of the solder by letting a user set an offset value in advance, and using the offset value set in this manner, for example.

In the foregoing, embodiments of the invention have been explained with reference to the accompanying drawings, however the present invention is not limited to the illustrated embodiments. Various modifications and adaptations of the illustrated embodiments are possible within a scope that is identical or equivalent to the present invention.

INDUSTRIAL APPLICABILITY

The present invention can be used advantageously whenever it is necessary to measure the height of solder.

INDEX TO THE REFERENCE NUMERALS

10 ... three-dimensional shape measurement apparatus, 11 ... light-projecting unit, 12 .. image pickup unit, 13 ... image analysis / driver control unit, 14 ... conveyor unit, 15 .. measurement object, 16 ... region irradiated by light pattern, 17 ... region not irradiated by light pattern, 22 ... light source, 24 ... projection lens, 25, 49a, 49b ... substrate, 25a ... surface, 26 ... pattern generation element, 27 ... beam divider unit, 29 ... solder, 30 ... lands, 31 ... wiring pattern, 32 ... through hole, 33 ... serial number, 34 ... resist, 35 ... inspection block, 35a ... region of wiring pattern, 35b ... region for offset calculation, 35c ... region of lands, 40 ... line sensor, 41 .. image pickup lens, 42 .. controller, 43 ... capture board, 44 ... CPU, 45 ... RAM, 46 ... conveyor stage, 47 ... servo motor, 48 ... substrate clamper, 48a ... reference plane, 50 ... design information obtaining function, 51 ... image obtaining function, 52 ... image enlargement judgment function, 53 ... wiring pattern extraction function, 54 ... land extraction function, 55 ... solder extraction function, 56 ... approximation surface calculation function, 57 ... height measurement function, 58 ... land offset calculation function, 59 ... land offset subtracting function, 60 ... inspection function, 61 ... land offset storage function, 62 ... land offset read-in function.

**Claims**

1. A three-dimensional shape measurement apparatus (10) for measuring the three-dimensional shape of a member on a substrate (25), having at least one land, which is a region to which solder (29) is applicable, by analyzing a light pattern projected onto the member,; the three-dimensional shape measurement apparatus (10) comprising:

   a light projecting unit (11) for projecting the light pattern onto the surface of the member on the substrate (25), an image pickup means (12) for picking up an image of a member on the substrate onto which the light pattern is projected, a central processing unit (44) configured to operate the three-dimensional shape measurement apparatus (10) to:

measure a height of a predetermined region from a predetermined reference plane based on a first image obtained by the image pickup means (12), the image comprising the predetermined region prior to an application of solder (29) on the land;

calculate a height distribution of a wiring pattern of the substrate (25) in the predetermined region, based on the measured height of the predetermined region;

measure a height of a land from the predetermined reference plane based on the first image obtained by the image pickup means (12), the image comprising the land within the predetermined region prior to the application of solder (29);

calculate a first distance between the height distribution of the wiring pattern of the substrate (25) in the predetermined region and the measured height of the land;

store the calculated first distance;

measure a second height of the wiring pattern based on a second image obtained by the image pickup means (12), the second image comprising the wiring pattern of the substrate after the application of solder;

calculate an approximation surface of the substrate (25) at the wiring pattern, based on the measured second height of the wiring pattern;

measure a height of the land including the solder based on a second image obtained by the image pickup means (12), the second image comprising the solder (29) applied on the land of the substrate (25),

calculate a second distance between the calculated approximation surface of the substrate (25) at the wiring pattern and the measured height of the land including the solder (29); and

calculate a height of solder (29) applied on the land of the substrate (25) using the first distance and the second distance.

2. A three-dimensional shape measurement method for measuring the three-dimensional shape of a member on a substrate having at least one land, which is a region to which solder (29) is applicable, the method comprising:

a step of projecting a light pattern onto the surface of the member on the substrate (25);

a step of picking up an image of a member on the substrate onto which the light pattern is projected;

a step of measuring a height of a predetermined region from a predetermined reference plane based on a first image obtained by the image pickup means (12), the first image comprising the predetermined region prior to an application of solder (29) on the land;

a step of calculating a height distribution of a wiring pattern of the substrate (25) in the predetermined region, based on the measured height of the predetermined region;

a step of measuring a height of a land from the predetermined reference plane based on the first image obtained by the image pickup means (12), the image comprising the land within the predetermined region prior to the application of solder (29);

a step of calculating a first distance between the height distribution of the wiring pattern of the substrate (25) in the predetermined region and the measured height of the land;

a step of storing the calculated first distance;

a step of measuring a height of the wiring pattern in the predetermined region from second image, the image comprising the wiring pattern of the substrate after the application of solder;

a step of calculating an approximation surface of the substrate (25) at the wiring pattern, based on the height of the wiring pattern measured from the image;

a step of measuring a height of the land including the solder (29) from the second image, the image comprising the solder (29) applied on the land of the substrate (25);

a step of calculating a second distance between the calculated approximation surface of the substrate (25) at the wiring pattern and the measured height of the land including the solder (29); and

a step of calculating a height of the solder (29) applied on said land of the substrate (25), using the stored first distance and the calculated second distance.

**Patentansprüche**

1. 3D-Formmessvorrichtung (10) zum Messen der dreidimensionalen Form eines Elements auf einem Substrat (25), das zumindest eine Anschlussfläche aufweist, die einem Bereich entspricht, auf welchem Lötzinn (29) aufbringbar ist, durch Analysieren eines auf das Element projizierten Lichtmusters; wobei die 3D-Formmessvorrichtung (10) aufweist:

# EP 2 492 633 B1

eine Lichtprojektionseinheit (11) zum Projizieren des Lichtmusters auf die Oberfläche des Elements auf dem Substrat (25),

ein Bildaufnahmemittel (12) zum Aufnehmen eines Bildes eines Elements auf dem Substrat, auf welches das Lichtmuster projiziert wird,

eine zentrale Verarbeitungseinheit (44), die eingerichtet ist, die 3D-Formmessvorrichtung (10) zu betreiben, um:

eine Höhe eines vorgegebenen Bereichs aus einer vorgegebenen Referenzebene anhand eines ersten, durch das Bildaufnahmemittel (12) erlangten Bildes zu messen, wobei das Bild den vorgegebenen Bereich vor dem Aufbringen des Lötzinns (29) auf der Anschlussfläche aufweist;

eine Höhenverteilung eines Verkabelungsmusters auf dem Substrat (25) in dem vorgegebenen Bereich anhand der gemessenen Höhe des vorgegebenen Bereichs zu berechnen;

eine Höhe einer Anschlussfläche aus der vorgegebenen Referenzebene anhand des ersten, durch das Bildaufnahmemittel (12) erlangten Bildes zu messen, wobei das Bild die Anschlussfläche innerhalb des vorgegebenen Bereichs vor dem Aufbringen des Lötzinns (29) aufweist;

einen ersten Abstand zwischen der Höhenverteilung des Verkabelungsmusters auf dem Substrat (25) in dem vorgegebenen Bereich und der gemessenen Höhe der Anschlussfläche zu berechnen;

den berechneten ersten Abstand zu speichern;

eine zweite Höhe des Verkabelungsmusters anhand eines zweiten, durch das Bildaufnahmemittel (12) erlangten Bildes zu messen, wobei das zweite Bild das Verkabelungsmuster des Substrats nach dem Aufbringen des Lötzinns aufweist;

eine Näherungsoberfläche des Substrats (25) bei dem Verkabelungsmuster anhand der gemessenen zweiten Höhe des Verkabelungsmusters zu berechnen;

eine Höhe der das Lötzinn umfassenden Anschlussfläche anhand eines zweiten, durch das Aufnahmemittel (12) erlangten Bilds zu messen, wobei das zweite Bild das auf die Anschlussfläche auf dem Substrat (25) aufgebrachte Lötzinn (29) aufweist,

einen zweiten Abstand zwischen der berechneten Näherungsoberfläche des Substrats (25) bei dem Verkabelungsmuster und der gemessenen Höhe der das Lötzinn (29) umfassenden Anschlussfläche zu berechnen, und

eine Höhe des auf die Anschlussfläche des Substrats (25) aufgebrachten Lötzinns (29) unter Verwendung des ersten Abstands und des zweiten Abstands zu berechnen.

2. 3D-Formmessverfahren zum Messen der dreidimensionalen Form eines Elements auf einem Substrat, das zumindest eine Anschlussfläche aufweist, welches einem Bereich entspricht, auf welchem Lötzinn (29) aufbringbar ist, wobei das Verfahren aufweist:

einen Schritt eines Projizierens eines Lichtmusters auf die Oberfläche des Elements auf dem Substrat (25);

ein Schritt eines Aufnehmens eines Bilds eines Elements auf dem Substrat, auf welchem das Lichtmuster projiziert wird;

einen Schritt eines Messens einer Höhe eines vorgegebenen Bereichs aus einer vorgegebenen Referenzebene anhand eines ersten, durch das Bildaufnahmemittel (12) erlangten Bildes, wobei das erste Bild den vorgegebenen Bereich vor einem Aufbringen von Lötzinn (29) auf der Anschlussfläche aufweist;

einen Schritt eines Berechnens einer Höhenverteilung eines Verkabelungsmusters des Substrats (25) in dem vorgegebenen Bereich anhand der gemessenen Höhe des vorgegebenen Bereichs;

einen Schritt eines Messens einer Höhe einer Anschlussfläche aus der vorgegebenen Referenzebene anhand des ersten, durch das Bildaufnahmemittel (12) erlangten Bildes, wobei das Bild die Anschlussfläche innerhalb des vorgegebenen Bereichs vor dem Aufbringen des Lötzinns (29) aufweist;

einen Schritt eines Berechnens eines ersten Abstands zwischen der Höhenverteilung des Verkabelungsmusters auf dem Substrat (25) in dem vorgegebenen Bereich und der gemessenen Höhe der Anschlussfläche;

einen Schritt eines Speicherns des berechneten ersten Abstands;

einen Schritt eines Messens einer Höhe des Verkabelungsmusters in dem vorgegebenen Bereich von einem zweiten Bild, wobei das Bild das Verkabelungsmuster des Substrats nach dem Aufbringen des Lötzinns aufweist;

einen Schritt eines Berechnens einer Näherungsoberfläche des Substrats (25) bei dem Verkabelungsmuster anhand der von dem Bild gemessenen Höhe des Verkabelungsmusters;

einen Schritt eines Messens einer Höhe der das Lötzinn (29) umfassenden Anschlussfläche von dem zweiten Bild, wobei das Bild das auf der Anschlussfläche des Substrats (25) aufgebrachte Lötzinn (29) aufweist;

einen Schritt eines Berechnens eines zweiten Abstands zwischen der berechneten Näherungsoberfläche des Substrats (25) bei dem Verkabelungsmuster und der gemessenen Höhe der das Lötzinn (29) umfassenden Anschlussfläche; und

einen Schritt eines Berechnens einer Höhe des auf der Anschlussfläche des Substrats (25) aufgebrachten Lötzinns (29) unter Verwendung des gespeicherten ersten Abstands und des berechneten zweiten Abstands.

**Revendications**

1. Appareil de mesure de forme tridimensionnelle (10) pour mesurer la forme tridimensionnelle d'un élément situé sur un substrat (25), comportant au moins une zone de contact, qui est une région à laquelle peut être appliquée une soudure (29), par une analyse d'un motif de lumière projeté sur l'élément ; l'appareil de mesure de forme tridimensionnelle (10) comprenant :

une unité de projection de lumière (11) destinée à projeter le motif de lumière sur la surface de l'élément situé sur le substrat (25),
un moyen de capture d'images (12) destiné à capturer une image d'un élément situé sur le substrat sur lequel est projeté le motif de lumière,
une unité centrale de traitement (44) configurée pour mettre en oeuvre l'appareil de mesure de forme tridimensionnelle (10) pour :

mesurer une hauteur d'une région prédéterminée par rapport à un plan de référence prédéterminé sur la base d'une première image obtenue par le moyen de capture d'images (12), l'image comprenant la région prédéterminée avant une application de soudure (29) à la zone de contact ;
calculer une distribution de hauteur d'un motif de câblage du substrat (25) dans la région prédéterminée, sur la base de la hauteur mesurée de la région prédéterminée ;
mesurer une hauteur d'une zone de contact par rapport au plan de référence prédéterminé sur la base de la première image obtenue par le moyen de capture d'images (12), l'image comprenant la zone de contact à l'intérieur de la région prédéterminée avant l'application de soudure (29) ;
calculer une première distance entre la distribution de hauteur du motif de câblage du substrat (25) dans la région prédéterminée et la hauteur mesurée de la zone de câblage ;
mémoriser la première distance calculée ;
mesurer une seconde hauteur du motif de câblage sur la base d'une seconde image obtenue par le moyen de capture d'images (12), la seconde image comprenant le motif de câblage du substrat après l'application de soudure;
calculer une surface d'approximation du substrat (25) au niveau du motif de câblage, sur la base de la seconde hauteur mesurée du motif de câblage ;
mesurer une hauteur de la zone de contact comprenant la soudure sur la base d'une seconde image obtenue par le moyen de capture d'images (12), la seconde image comprenant la soudure (29) appliquée à la zone de contact du substrat (25) ;
calculer une seconde distance entre la surface d'approximation calculée du substrat (25) au niveau du motif de câblage et la hauteur mesurée de la zone de contact comprenant la soudure (29) ; et
calculer une hauteur de soudure (29) appliquée à la zone de contact du substrat (25) au moyen de la première distance et de la seconde distance.

2. Procédé de mesure de forme tridimensionnelle pour mesurer la forme tridimensionnelle d'un élément situé sur un substrat comportant au moins une zone de contact, qui est une région à laquelle peut être appliquée une soudure (29), le procédé comprenant :

une étape consistant à projeter un motif de lumière sur la surface de l'élément situé sur le substrat (25) ;
une étape consistant à capturer une image d'un élément situé sur le substrat sur lequel est projeté le motif de lumière ;
une étape consistant à mesurer une hauteur d'une région prédéterminée par rapport à un plan de référence prédéterminé sur la base d'une première image obtenue par le moyen de capture d'images (12), la première image comprenant la région prédéterminée avant une application de soudure (29) à la zone de contact ;
une étape consistant à calculer une distribution de hauteur d'un motif de câblage du substrat (25) dans la région prédéterminée, sur la base de la hauteur mesurée de la région prédéterminée ;
une étape consistant à mesurer une hauteur d'une zone de contact par rapport au plan de référence prédéterminé sur la base de la première image obtenue par le moyen de capture d'images (12), l'image comprenant la zone de contact à l'intérieur de la région prédéterminée avant l'application de soudure (29) ;
une étape consistant à calculer une première distance entre la distribution de hauteur du motif de câblage du substrat (25) dans la région prédéterminée et la hauteur mesurée de la zone de contact ;

une étape consistant à mémoriser la première distance calculée ;

une étape consistant à mesurer une hauteur du motif de câblage dans la région prédéterminée à partir de la seconde image, l'image comprenant le motif de câblage du substrat après l'application de soudure ;

une étape consistant à calculer une surface d'approximation du substrat (25) au niveau du motif de câblage, sur la base de la hauteur du motif de câblage mesurée à partir de l'image ;

une étape consistant à mesurer une hauteur de la zone de contact comprenant la soudure (29) à partir de la seconde image, l'image comprenant la soudure (29) appliquée à la zone de contact du substrat (25) ;

une étape de calcul d'une seconde distance entre la surface d'approximation calculée du substrat (25) au niveau du motif de câblage et la hauteur mesurée de la zone de contact comprenant la soudure (29) ; et

une étape de calcul d'une hauteur de la soudure (29) appliquée à ladite zone de contact du substrat (25), au moyen de la première distance mémorisée et de la seconde distance calculée.

## FIG. 1

## FIG. 2

three-dimensional shape measurement apparatus — 10

**light-projecting unit** — 11

| light source — 22 | lens — 24 | pattern generation element — 26 | beam divider unit — 27 |

**image pickup unit** — 12

| lens — 41 | line sensor — 40 |

capture board — 43

CPU — 44

RAM — 45

**conveyor unit** — 14

| conveyor stage — 46 | servo motor — 47 |

controller — 42

**image analysis / driver control unit** — 13

**FIG. 3**

plan view

cross-sectional view along A-A

**FIG. 4**

plan view

cross-sectional view along B-B

## FIG. 5

## FIG. 6

Start

S11 input substrate information / inspection information

S12 convey bare board

S13 teaching

execute for each inspected board

S14 convey substrate to be inspected

S15 inspect

End

**FIG. 7**

Start

S21

read in inspection blocks

execute for each inspection block

S22

prepare approximated
surface of wiring pattern

S23

prepare approximated
surface of lands

S24

calculate land offset

S25

store land offset

End

## FIG. 8

Start

S31
obtain image of
inspection block

S32
extract wiring pattern region

S33
is condition for
preparation of approximated
surface satisfied?

NO

YES

S34
measure height of
wiring pattern region

S36
enlarge image
obtaining region

S35
calculate coefficients of wiring
pattern approximated surface

End

## FIG. 9

Start

S41
obtain image of
inspection block

S42
extract land region

S43
calculate height of
land region

S44
read in coefficients of
approximated surface of
wiring pattern

S45
calculate coefficients of
approximated surface of lands

End

# FIG. 10

Start

S51

read in coefficients of
approximated surface of
wiring pattern

S52

read in coefficients of
approximated surface of lands

S53

calculate distance between the
two approximated surfaces

S54

store land offset

End

# FIG. 11

Start

S61

read in inspection blocks

execute for each inspection block

S62

prepare approximated
surface of wiring pattern

S63

extract solder region

S64

read in land offset

S65

calculates solder height

End

**FIG. 12**

EP 2 492 633 B1

**FIG. 13**

**FIG. 14**

**FIG. 15**

**FIG. 16**

**FIG. 17**

**FIG. 18**

**FIG. 19**

**FIG. 20**

## FIG. 21

## FIG. 22

**FIG. 23**

**FIG. 24**

**FIG. 25**

**FIG. 26**

reference height G

105

107a

(a)

106

105

107b

(b)

**EP 2 492 633 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3868917 B
- JP 2010243508 A
- US 5465152 A
- US 5995232 A
- JP 5296731 A
- JP 2009260101 A
- WO 0161275 A1
- JP 2009031105 A
- JP 2007114071 A